# EUROPÄISCHE PATENTANMELDUNG

(11) **EP 2 724 761 A1**
(43) Veröffentlichungstag der Anmeldung: **30.04.2014**
(21) Anmeldenummer: 12190140.9
(22) Anmeldetag: 26.10.2012
(51) Int. Cl.: A63F 3/00, G06K 19/077, G06F 3/0488

(54) **Modulares Objekt zur Identifizierung durch Berührungsbildschirme**

(71) Anmelder: printechnologics GmbH, 09112 Chemnitz (DE)
(72) Erfinder: Köpcke, Johannes, 01187 Dresden (DE); Weigelt, Karin, 09112 Chemnitz (DE); Richter, Anja, 09123 Chemnitz (DE); Förster, Matthias, 01307 Dresden (DE)
(74) Vertreter: Lange, Sven

(57) **Zusammenfassung**

Die Erfindung beschreibt ein modulares Objekt, das aus mindestens einem ersten und mindestens einem zweiten Modul besteht, wobei das erste Modul ein Basisobjekt und das zweite ein Identifikationsmittel ist und das Identifikationsmittel eine elektrisch leitfähige Schicht aufweist.

## Beschreibung

Die Erfindung betrifft ein modulares Objekt für einen Berührungsbildschirm, das aus einem ersten und zweiten Modul besteht, wobei das erste Modul ein Basisobjekt und das zweite ein Identifikationsmittel ist und das Identifikationsmittel eine elektrisch leitfähige Schicht aufweist. Außerdem betrifft die Erfindung ein System, umfassend ein modulares Objekt und einen Berührungsbildschirm, wobei das Objekt mit dem Berührungsbildschirm in Kontakt gebracht vorliegt.

Brettspiele sind beliebte Spiele, mit denen mehrere Spieler miteinander oder auch gegeneinander spielen. In der Regel dient eine Unterlage als Spielebene, auf der die Spieler mit ihren Spielfiguren einer vorgegebenen Route auf dem Spielfeld folgen müssen. Die Route, das heißt die Züge, der Figuren kann durch zu erledigende Aufgaben erschwert werden, so dass eine Figur nur ins Ziel gelangt, wenn alle Aufgaben erfolgreich gemeistert wurden.

Brettspiele wurden im Laufe der Jahre modernisiert und mit elektronischen Bestandteilen versehen. So existieren z. B. Brettspiele, die zu definierten Zeitpunkten des Spielverlaufs einen Ton oder sogar vollständige Melodien abspielen. Auch können die von den Spielern zu erledigenden Aufgaben durch einen in das Brettspiel integrierten Computer vorgelesen und von den Spielern verändert werden.

In Casinos haben hoch komplexe Spiele Einzug genommen, die nur noch wenig mit dem ursprünglichen Brettspiel gemein haben. So werden beispielsweise Kameras oder sonstiges elektronisches Equipment verwendet, um die Augenzahl von Würfeln zu erkennen.

Im Stand der Technik sind außerdem Spielkarten aus Papier oder Pappe beschrieben, die mithilfe eines Lesegerätes ausgelesen werden können. Diese Spielkarten können unter Spielern ausgetauscht werden und die Spieler können mithilfe ihrer Karten gegeneinander antreten.

Resistive oder kapazitive Touchscreen wurden benutzt, um Maschinen einfacher zu bedienen. Seitdem die Touchscreens jedoch Einzug in den Alltag gefunden haben, sind sie für eine Vielzahl von Anwendungen nutzbar und finden im täglichen Gebrauch einen hohen Stellenwert. Um eine Eingabe an einem kapazitiven Bildschirm (auch als Berührungsbildschirm, Touchscreen oder Flächensensor bezeichnet) vorzunehmen, können neben den Fingern auch spezielle Eingabestifte genutzt werden. Der kapazitive, berührungsempfindliche Bildschirm detektiert die Position des Eingabestifts, der die kapazitive Kopplung zwischen Zeilen- und Spaltenelektroden ändert. Auf einem kapazitiven, berührungsempfindlichen Bildschirm erfolgt die Eingabe oft durch den oder die Finger eines Benutzers. In der Regel ist der Touchscreen in einem elektrischen Gerät untergebracht. Solche Geräte sind beispielsweise Smartphones, Handys, Displays, Tablet-PCs, Tablet-Notebooks, Touchpad-Geräte, Grafiktabletts, Fernseher, PDAs, MP3-Player, Trackpads und/oder kapazitive Eingabegeräte, ohne darauf begrenzt zu sein. Touchscreens sind auch als Tastschirm, Flächensensor oder Sensorbildschirm bekannt. Ein Flächensensor muss sich nicht zwingend vor einem Display befinden. Beispielsweise kann dieser auch als Touchpad oder dergleichen ausgebildet sein und eingesetzt werden. Die Touchscreens können mehrere gleichzeitige Berührungen erkennen. Diese sogenannten Multi-Touch-Eingaben können dazu verwendet werden, um zum Beispiel angezeigte Elemente insbesondere zu drehen oder zu skalieren. Solches ist dem Benutzer aus dem täglichen Gebrauch mit dem Smartphone bekannt. Der Flächensensor ist dabei bevorzugt als sogenannte Projected-Capacitive-Touch-Technik (PCT-Technik) ausgeführt. Varianten der PCT-Technik sind beispielsweise "Mutual Capacitance" und "Self Capacitance", welche ausgeführt sein können als Mutual-Capacitance-Touchscreen und Self-Capacitance-Touchscreen.

Im Stand der Technik umfasst ein solcher Touchscreen insbesondere einen aktiven Schaltkreis, den Touch-Controller, welcher mit einer Struktur von Elektroden verbunden ist. Bei einem Mutual- Capacitance Touchscreen sind diese Elektroden in der Regel aufgeteilt in Sende- und Empfangselektroden. Der Touch-Controller steuert die Elektroden vorzugsweise so an, dass zwischen jeweils einer oder mehreren Sendeelektroden und einer oder mehreren Empfangselektroden ein Signal übertragen wird. Der im Stand der Technik beschriebene Zweck eines Touchscreens ist insbesondere das Detektieren von Fingern oder speziellen Eingabegeräten und deren Position auf der Oberfläche des Touchscreens. Hierzu bewirkt das Einbringen z. B. eines Fingers, dass das Signal zwischen den Elektroden verändert wird. In der Regel wird das Signal vermindert, weil der eingebrachte Finger einen Teil des Signals von der Sendeelektrode aufnimmt und so ein geringeres Signal an der Empfangselektrode ankommt.

Der Einzug der Touchscreens in das tägliche Leben und deren universelle Einsetzbarkeit wird vermehrt als Anreiz dazu genommen, neue Technologien bereitzustellen, die die Einsetzbarkeit der Touchscreens erhöhen. Insofern existieren bereits Spiele, die vor Jahren als Brettspiele bekannt waren, und nunmehr mithilfe oder auf dem Touchscreen spielbar sind. Hierzu zählen nicht nur einfache Spiele, die mithilfe von Fingern bedient werden, sondern auch komplexere, bei denen eine Spielfigur eingesetzt wird. Bei dieser Spielfigur, die nichts mit der ursprünglich verwendeten Spielfigur für Brettspiele gemein hat, außer ggf. ihr Äußeres, kann es sich beispielsweise um die Figur eines Autos handeln. Ein Spieler erwirbt die Figur im Handel und kann mithilfe des Touchscreens bzw. des auf dem elektrischen Gerät vorliegenden Programms z. B. neue Fähigkeiten seines Fahrzeuges (seiner Spielfigur) freischalten.

Ferner sind Spielfiguren im Stand der Technik offenbart, mit deren Hilfe ein Spieler Spiele auf dem Touchscreen spielen kann. Der Spieler kann Züge vollführen oder Aufgaben bewältigen. Die Spielfiguren werden, wenn sie mit einem Touchscreen in Berührung kommen, von diesem detektiert und identifiziert. Die Oberfläche der Spielfigur ist mit einer elektrisch leitfähigen Schicht versehen. Dabei ist die Bodenfläche hinsichtlich ihrer Leitfähigkeit strukturiert, so dass nur bestimmte, definierte Teilflächen des Spielfigurenbodens elektrisch leitfähig sind. Diese Teilflächen ergeben als Gesamtheit interpretiert einen Datencode. Beim Anfassen bzw. Berühren der Spielfiguren durch einen Benutzer können diese strukturierten Teilflächen, wenn sie mit einem Touchscreen in Kontakt gebracht werden, durch ein einen Touchscreen aufweisendes Gerät detektiert und identifiziert werden. Die strukturierten, elektrisch leitfähigen Flächen im Figurenboden sind elektrisch mit der Oberfläche der Spielfigur verbunden.

Nachteilig bei den im Stand der Technik bekannten Figuren ist die feste, nicht lösbare Verbindung zwischen der Spielfigur und den strukturierten Teilflächen im Figurenboden. Eine Änderung im Design der strukturierten, elektrisch leitfähigen Teilflächen im Figurenboden, z. B. um verschiedene Spielfiguren zu realisieren (Individualisierung) oder um eine Verbesserung im Kopierschutz umzusetzen, führt zwangsläufig zu einer erheblichen Änderung in der Figurenfertigung. Außerdem ist hierdurch eine technische Änderung der Herstellungsverfahren bzw. Fertigungsmaschinen und der Prozessabläufe notwendig.

Aufgabe der Erfindung war es demgemäß, ein Objekt bereitzustellen, welches einfach änderbar und mit kapazitiven Touchscreens nutzbar ist.

Gelöst wird die Aufgabe durch die unabhängigen Ansprüche. Bevorzugte Ausführungsformen finden sich in den Unteransprüchen.

Es war völlig überraschend, dass ein modulares Objekt bereitgestellt werden kann, welches einfach und in wenigen Produktionsschritten an neue Verwendungen anpassbar ist. Nichts dergleichen ist aus dem Stand der Technik bekannt.

In einem ersten Aspekt betrifft die Erfindung ein modulares Objekt für Berührungsbildschirme, umfassend mindestens ein erstes und ein zweites Modul, wobei
a. das erste Modul ein Basisobjekt mit elektrisch leitfähigen Funktionselementen ist, die mindestens aus einer Koppelelektrode an einer Kontaktfläche des Basisobjekts und einer damit elektrisch verbundenen Koppelfläche bestehen, wobei das Basisobjekt mindestens eine Kontaktfläche aufweist, und
b. das zweite Modul ein, mindestens eine elektrisch leitfähige Schicht umfassendes Identifikationsmittel ist, wobei die elektrisch leitfähige Schicht mindestens eine Einkoppelelektrode umfasst,
wobei das zweite Modul stoffschlüssig, kraftschlüssig und/oder formschlüssig an der Kontaktfläche des ersten Moduls angebracht ist. Es sei angemerkt, dass der Begriff "Berührungsbildschirm" im Sinne der Erfindung analog zu "Touchscreen" verwendet wird. Durch die modulare Ausgestaltung des Objektes ist es möglich, eine Individualisierung des Objektes vorzunehmen, ohne hierfür apparative Änderungen der Fertigungsmaschinen durchführen zu müssen. Damit ist ein wesentlicher Vorteil, dass die Module getrennt gefertigt werden können. Bei den im Stand der Technik bekannten Spielfiguren ist mithin keine Individualisierung möglich ohne erheblich großen Aufwand im Fertigungsablauf. Es muss eine vollständig neue Spielfigur hergestellt werden.

Weiterhin kann das Prinzip des modularen Aufbaus einfach auf andere Objekte angewendet werden, sodass sich neue Einsatzgebiete und Interaktionsmöglichkeiten mit Touchscreens erschließen, z.B. Anpassung von Dosen und Verpackungen für die Nutzung auf dem Touchscreen. Es können somit Objekte des täglichen Lebens mit einem Touchscreen in Kontakt gebracht werden und mit diesem interagieren, die zuvor nicht für solch eine Verwendung nutzbar waren.

Im Sinne der Erfindung beschreibt eine Individualisierung eine Änderung eines bestehenden Objektes, z. B. einer Spielfigur, um z. B. Varianten dieser herzustellen oder allgemein, unterschiedliche Spielfiguren bereitzustellen, die vom Touchscreen als verschieden erkannt werden. Insbesondere bezeichnet eine Individualisierung im Sinne der Erfindung eine Ausstattung eines Objektes mit spezifischen Merkmalen, die es bei Interaktion mit einem Touchscreen von anderen (gleichartigen) Objekten unterscheidet. Mithilfe der Erfindung ist es nun möglich, ein Basisobjekt herzustellen, welches mit einem individualisierten zweiten Modul verbunden wird. Das Basisobjekt weist elektrisch leitfähige Funktionselemente auf, die mindestens aus einer Koppelelektrode an einer Kontaktfläche des Basisobjekts und einer damit elektrisch verbundenen Koppelfläche bestehen, wobei das Basisobjekt mindestens eine Kontaktfläche aufweist. An die Kontaktfläche des Basisobjektes wird das zweite Modul angebracht. Das zweite Modul ist als individualisiertes Identifikationsmittel ausgestaltet und weist mindestens eine elektrisch leitfähige Schicht auf, die mindestens eine Einkoppelelektrode umfasst. Damit das modulare Objekt mit einem Berührungsbildschirm, d.h. einem Touchscreen interagieren kann, ist es bevorzugt, wenn eine kapazitive Kopplung oder eine elektrische Leitfähigkeit zwischen beiden Modulen besteht, wobei diese insbesondere zwischen der Einkoppelelektrode und der Koppelelektrode hergestellt ist. Die Koppelelektrode des Basisobjektes stellt eine Wirkverbindung zwischen der elektrisch leitfähigen Schicht des zweiten Moduls und einer Koppelfläche des Basisobjektes her. Der Benutzer berührt das Basisobjekt, insbesondere die Koppelfläche.

Die Individualisierung des modularen Objektes erfolgt durch das Identifikationsmittel, welches austauschbar ist, sofern die Verbindungstechnik dies zulässt. Das Identifikationsmittel ist stoffschlüssig, kraftschlüssig und/oder formschlüssig an der Kontaktfläche des ersten Moduls angebracht. Die Verbindung kann vorteilhafterweise reversibel oder irreversibel ausgestaltet sein, wobei eine reversible Verbindung bevorzugt ist. Dem Fachmann sind diese Verbindungstechniken bekannt und er weiß, welche Befestigungsmittel hierunter zu subsumieren sind. Das Identifikationsmittel kann im Sinne der Erfindung auch als Etikett oder Sockel bezeichnet werden. Der Fachmann erkennt aus den Ausgestaltungen der Erfindung, dass das zweite Modul in unterschiedlichen Formen gestaltet sein kann und auch durch verschiedene Methoden mit dem ersten Modul verbindbar ist.

Ein modulares Objekt im Sinne der Erfindung kann jegliches räumliches Gebilde sein, das mit einem Touchscreen in Kontakt gebracht werden kann. Dem Fachmann sind die physikalischen Grenzen eines Touchscreens bekannt. So ist beispielsweise ausgeschlossen, dass das modulare Objekt derart gestaltet ist, dass es 10 m groß ist und 500 kg wiegt, da es mit diesen Abmessungen nicht oder nur schwer mit einem Touchscreen in Kontakt gebracht werden kann. Zu beachten ist jedoch, dass das Objekt mit solchen Abmessungen einen Bereich aufweisen kann, an dem das zweite Modul angebracht ist und an welches ein Touchscreen gehalten werden kann. Auch ein solches Objekt wäre dann unter die Merkmale der Erfindung zu subsumieren. Es sind jedoch Objekte bevorzugt, die von einem Benutzer bewegbar und anhebbar sind und derart von dem Benutzer bewegt werden, dass sie mit einem Touchscreen in Kontakt gebracht werden können. Es ist bevorzugt, dass das Basisobjekt elektrisch leitfähig ist und/oder eine elektrisch leitfähige Schicht zumindest teilweise in, zwischen und/oder auf einem elektrisch nicht leitfähigen Material vorliegt. Das Basisobjekt weist insbesondere eine elektrisch leitfähige Oberfläche auf. Dazu kann dieses aus einem elektrisch nicht leitfähigen Material gefertigt sein. Das Material ist vorzugsweise ausgewählt aus der Gruppe umfassend Kunststoff, Papier, Karton, Holz, Holzwerkstoff, Folie, Verbundwerkstoff, Glas, Keramik, Leiterplattenmaterial, Textilien, Leder oder einer Kombination davon. Das Material des Basisobjektes ist insbesondere ein elektrisch nicht leitender Stoff, der vorzugsweise ein geringes Gewicht aufweist. Es können lichtdurchlässige oder lichtundurchlässige Materialien verwendet werden. Bevorzugte Kunststoffe umfassen insbesondere thermoplastische Kunststoffe, PVC, PETG, PV, PETX oder PE.

Die mit dem elektrisch nicht leitfähigen Material verbundene elektrisch leitfähige Schicht kann zumindest teilweise in, zwischen und/oder auf einem elektrisch nicht leitfähigen Material vorliegen. Es kann bevorzugt sein, dass die elektrisch leitfähige Schicht gut leitend ist. Es kann aber auch vorteilhaft sein, ein weniger gut elektrisch leitfähiges Material für die Oberfläche des Basisobjektes zu nutzen und ein gut bis sehr gut elektrisch leitfähiges Material lediglich für die elektrisch leitfähige Schicht des Identifikationsmittels einzusetzen. Als Beispiel für sehr gut elektrisch leitfähige Materialien seien Materialien auf Silberbasis genannt. Gut elektrisch leitfähige Materialien umfassen beispielsweise kohlenstoffbasierte Materialien, z. B. Graphitspray.

Es ist bevorzugt, dass das erste und zweite Modul kapazitiv gekoppelt oder direkt elektrisch miteinander verbunden vorliegen. Das erste Modul und das zweite Modul können über entsprechende Koppelflächen verfügen, die bei der Verbindung des ersten mit dem zweiten Modul derart zueinander angeordnet sind, dass eine kapazitive Kopplung zwischen den Koppelflächen (insbesondere Koppelelektrode und Einkoppelelektrode) erfolgt. Ferner kann es vorteilhaft sein, dass die Module elektrisch, z. B. über elektrisch leitfähige Leiterbahnen, miteinander verbunden sind und so eine elektrische Leitfähigkeit zwischen den Modulen besteht. Es kann vorteilhaft sein, wenn ein oder mehrere Identifikationsmittel direkt oder indirekt an dem Basisobjekt angebracht sind. Die Identifikationsmittel können an verschiedenen Seiten des Basisobjektes angebracht werden, so dass zum Beispiel das modulare Objekt in verschiedenen Orientierungen mit einem Touchscreen in Kontakt gebracht werden kann. Weiterhin können die unterschiedlichen Identifikationsmittel unterschiedliche, elektrisch leitfähige Schichten aufweisen und somit auch vom Touchscreen als unterschiedlich erkannt werden. Demgemäß kann es bevorzugt sein, wenn das Basisobjekt mehr als eine Kontaktfläche zur Anbringung des Identifikationsmittels aufweist. Die Kontaktfläche des Basisobjektes kann beliebig ausgestaltet sein, wobei sie lediglich zur Befestigung des Identifikationsmittels geeignet und mittels Koppelelektrode die elektrische Kopplung zwischen Basisobjekt und Identifikationsmittel gewährleistet sein muss. Es kann auch vorteilhaft sein, wenn mehrere Identifikationsmittel übereinander an dem Basisobjekt angebracht sind und erst dann komplettiert sind. Insbesondere ist bevorzugt, dass die Identifikationsmittel übereinander angebracht sind, sodass eins auf dem anderen liegt oder das die Identifikationsmittel derart angebracht sind, dass sie nebeneinander auf der Oberfläche des Objektes vorliegen.

In einer bevorzugten Ausführungsform ist die Koppelelektrode als elektrisch leitfähige Schicht auf der Kontaktfläche des Basisobjektes mindestens als Teilfläche ausgeführt. Die Kontaktfläche ist vorteilhafterweise am Boden des Objektes angeordnet, wobei auch jegliche sonstige Position am Basisobjekt vorteilhaft sein kann. Die Koppelektrode ist vorzugsweise als strukturierte, elektrisch leitfähige Teilfläche ausgebildet, wie z. B. eine vollständig gefüllte Kreisfläche, ein Kreisring, ein zum Teil unterbrochener Kreisring oder eine komplett ausgefüllte Bodenfläche des Basisobjekts. Vorteilhafterweise kann die Koppelelektrode jegliche geometrische Form oder Anordnung auf der Kontaktfläche des Basisobjektes annehmen. Es ist von Vorteil, wenn zumindest ein Teilbereich der Kontaktfläche eben ausgebildet ist, so dass ein flächiger Kontakt zu einem Touchscreen herstellbar ist.

Da die Koppelektrode insbesondere elektrisch leitfähig ausgestaltet ist, kann es bevorzugt sein, dass ein oder mehrere elektrisch leitfähige Befestigungsmittel an der Kontaktfläche des Basisobjektes angebracht sind und mindestens als Teil eines Funktionselementes vorliegen. Dem Fachmann ist der Begriff Befestigungsmittel bekannt und er subsumiert hierunter insbesondere Mittel aus Metall oder Kunststoff, die bei der Herstellung des modularen Objektes eingesetzt werden, um etwas zu fixieren. Hierbei kann es sich um Nägel, Schrauben, Kunststoffschrauben, Druckknöpfe, Nieten oder sonstige Mittel handeln, die der Befestigung dienen. Im Sinne der Erfindung kann der Begriff Befestigungsmittel synonym zu dem Begriff Verbindungsmittel verwendet werden. Es war völlig überraschend, dass ein solches Befestigungsmittel als Koppelelektrode genutzt werden kann, was die Herstellung des modularen Objektes nochmals erheblich vereinfacht. Die Befestigungsmittel können auch die Koppelelektrode ergänzen oder ersetzen und z. B. von einem Touchscreen, mit welchem das modulare Objekt in Kontakt gebracht wird, erkannt werden und zur Bestimmung der Position und /oder Orientierung des Identifikationsmittels herangezogen werden.

In einer bevorzugten Ausführungsform ist das Identifikationsmittel insbesondere mittels spezieller Spritzgießverfahren, z.B. In-Mold-Verfahren oder Folienhinterspritzen, Schweißverfahren oder Kleben mit dem Basisobjekt verbunden. Ein wesentlicher Vorteil des modularen Objektes ist seine einfache Herstellung aus den Einzelmodulen und die Möglichkeit der Individualisierung.

Als Folienhinterspritzen wird eine Sonderform des Spritzgießens bezeichnet, bei dem vor dem Einspritzen der Kunststoffschmelze Folien in das Spritzgießwerkzeug eingelegt werden. Die Einleger sind bedruckte Folien, die dreidimensional umgeformt werden können und anschließend beschnitten werden. Beim Vorformen der Folien unterscheidet man zwischen dem High Pressure Forming-Verfahren (HPF) und dem Thermoform-Verfahren. Hierdurch können präzise bedruckte Objekte mit hohen Verformungsgraden bereitgestellt werden. Es ist auch möglich, weitere Substrate, z.B. Stoff, Papier, Holzfurnier oder beliebig bedruckte oder strukturierte Folien, zu hinterspritzen. Dies wird als In-Mold-Verfahren (oder In-Mould-Verfahren) bezeichnet.

Weiterhin kann es vorteilhaft sein, wenn das Identifikationsmittel durch Schweißverfahren an dem Basisobjekt befestigt wird. Es können z.B. Ultraschallschweißen, Induktionsschweißen, Strahlungsschweißen oder weitere für Kunststoffe geeignete Schweißverfahren eingesetzt werden. Das Ultraschallschweißen ist ein Verfahren zum Fügen von thermoplastischen Kunststoffen und metallischen Werkstoffen. Die nötige Wärme wird durch eine hochfrequente mechanische Schwingung erreicht, welche zwischen den Bauteilen durch Molekular- und Grenzflächenreibung entsteht. Somit gehört das Ultraschallschweißen zur Gruppe der Reibschweißungen. Die Schwingungen werden unter Druck auf die zu verbindenden Werkstücke, nämlich das Basisobjekt und das Identifikationsmittel übertragen. Sie erhitzen sich und beginnen zu erweichen, wodurch der Dämpfungskoeffizient ansteigt. Die Zunahme des Dämpfungsfaktors führt zu einer höheren inneren Reibung, was die Temperaturerhöhung beschleunigt. Die Werkstoffe werden insbesondere nicht bis zur Schmelzung erhitzt. Die Verbindung entsteht nach Aufbrechen der Oxidschicht im Wesentlichen durch ein Ineinanderverzahnen der Werkstoffe. Das Ultraschallschweißen des Basisobjektes und des Identifikationsmittels ist durch sehr geringe Schweißzeiten und hohe Wirtschaftlichkeit gekennzeichnet.

Selbstverständlich kann es auch vorteilhaft sein, das Identifikationsmittel mittels Kleben an dem Basisobjekt zu befestigen. Es kann auch besonders bevorzugt sein elektrisch leitfähigen Kleber einzusetzen, um eine direkte elektrische Kopplung zu realisieren. Es ist auch möglich eine Kombination aus elektrisch leitfähigen und elektrisch nicht leitfähigen Klebern zu benutzen oder sogenannte "z-leitfähige" Systeme einzusetzen. Bei letzterer Gruppe wird die Leitfähigkeit nur in eine Richtung (die der z-Achse) übertragen.

Ein Großteil der im Stand der Technik offenbarten Spielfiguren besteht aus einem Kunststoff, wobei die Figuren im Spritzgießverfahren hergestellt werden. Es war demgemäß völlig überraschend, dass die modularen Objekte in einer bevorzugten Ausführungsform ebenfalls in einem solchen Verfahren hergestellt werden können und das Identifikationsmittel im Spritzgießverfahren in bzw. an das Basisobjekt gebracht werden kann. Vorzugsweise wird hierzu das Verfahren des Folienhinterspritzens (auch In-Mold-Labelling genannt) genutzt. Das Verfahren des Folienhinterspritzens ist allgemein bekannt und wird z. B. zur Dekoration von Kunststoffbauteilen eingesetzt. Es ist überraschend, dass dieses Verfahren auch zur Verbindung des Identifikationsmittels mit dem Basisobjekt verwendet werden kann. Die elektrisch leitfähige Schicht des Identifikationsmittels wird hierbei insbesondere auf geeignete Kunststofffolien (z. B. Polycarbonat, Polypropylen, Polyethylen, usw.) gedruckt. Anschließend wird die Folie zugeschnitten, ggf. verformt und manuell oder automatisch mit der elektrisch leitfähigen Schicht nach innen in das Spritzgießwerkzeug eingelegt. Beim nachfolgenden Spritzgießvorgang verbindet sich die Folie mit der Schmelze und ist nach dem Abkühlen mit dem Basisobjekt verbunden. Das Identifikationsmittel kann im Herstellungsschritt des Basisobjektes mit diesem verbunden werden, was einen erheblichen Vorteil bei der Herstellung der modularen Objekte mit sich bringt.

Es kann vorteilhaft sein, das Identifikationsmittel durch ein additives, semiadditives oder subtraktives Verfahren herzustellen und/oder auf dem Basisobjekt anzubringen. Ferner ist es bevorzugt, dass das Identifikationsmittel durch ein Druckverfahren, bevorzugt ein Massendruckverfahren, hergestellt ist. In einer bevorzugten Ausführungsform ist das Identifikationsmittel durch ein Transferfolienverfahren, bevorzugt ein Metallfolientransferverfahren und besonders bevorzugt durch ein Kaltfolientransferverfahren hergestellt. Dem Fachmann sind Massendruckverfahren, aber auch Transferfolienverfahren hinreichend bekannt. Es war jedoch überaus überraschend, dass ein solches, durch die bevorzugten Verfahren hergestelltes Identifikationsmittel mit dem ersten Modul des modularen Objektes verbindbar ist und vorallem eine Wirkverbindung zwischen dem ersten und dem zweiten Modul bereitgestellt werden kann. Dies wird durch den vorteilhaften Aufbau des modularen Objektes erreicht. Im Sinne der Erfindung kann das Identifikationsmittel auch nur als elektrisch leitfähige Schicht auf dem Basisobjekt vorliegen, wobei es auch vorteilhaft sein kann, dass das Identifikationsmittel aus einem elektrisch nicht leitfähigen Substrat oder Material besteht, auf welchem eine elektrisch leitfähige Schicht mindestens bereichsweise vorliegt. Das Identifikationsmittel kann vorteilhafterweise mittels additiver Verfahren wie Druckverfahren, Sprühverfahren, Stempelverfahren, PVD- und CVD- Verfahren, galvanischen Verfahren oder subtraktiven Verfahren wie Laserstrukturierung, Bürstverfahren, Fräsverfahren usw. aufgebracht werden. Auch können semi-additive Verfahren, wie z.B. Ätzverfahren, vorteilhaft sein. In einer Ausführungsform ist die elektrisch leitfähige Schicht mittels eines Transferverfahrens auf das Substrat aufgebracht. Hierbei ist insbesondere ein Folientransferverfahren, besonders ein Thermotransferverfahren bevorzugt. Dem Fachmann sind derartige Verfahren bekannt. Selbstverständlich können auch alle anderen Verfahren zur Aufbringung einer elektrisch leitfähigen Schicht verwendet werden.

Es ist bevorzugt, dass die elektrisch leitfähigen Flächen oder Schichten des Identifikationsmittels in Form von Teilflächen, insbesondere gefüllten Kreisen oder gefüllten Kreisringen vorliegen, wobei Teilflächen mittels Linienstrukturen, die im Sinne der Erfindung auch als Leiterbahnstruktur bezeichnet werden, elektrisch verbunden sind und wobei mindestens eine Teilfläche die Einkoppelelektrode ist. Die vorteilhafte Individualisierung der modularen Objekte wird insbesondere dadurch erreicht, indem an mindestens einer Kontaktfläche des jeweiligen Basisobjektes mindestens ein Identifikationsmittel angebracht wird. Das Identifikationsmittel weist vorzugsweise strukturierte, elektrisch leitfähige Schichten oder Flächen auf. Wenn das modulare Objekt mit einem Touchscreen in Kontakt gebracht wird, werden die elektrisch leitfähigen Flächen des Identifikationsmittels durch kapazitive Kopplung erkannt und als Berührungsereignisse interpretiert, so dass die Touchereignisse in ihrer Gesamtheit einen Datencode ergeben. Die strukturierten, elektrisch leitfähigen Flächen weisen spezifische Eigenschaften auf, die es ermöglichen, verschiedene, wiedererkennbare und unterscheidbare Datencodes zur Verfügung zu stellen. Beispielsweise kann eine solche Datenstruktur aus mehreren komplett gefüllten Kreisflächen mit einem bestimmten Durchmesser bestehen, die über Linien (Linienstrukturen oder Leiterbahnstrukturen) miteinander verbunden sind. Die Einkoppelelektrode kann vorteilhafterweise Bestandteil der Datenstruktur sein. Es können aber auch Datenstrukturen realisiert sein, bei denen die Einkoppelelektrode kein Bestandteil der Datenstruktur ist. Die elektrisch leitfähigen Schichten oder Flächen werden vorzugsweise mit der Koppelelektrode des Basisobjektes elektrisch gekoppelt. Das kann insbesondere dadurch geschehen, dass die Koppelelektrode sowie die elektrisch leitfähigen Flächen des Identifikationsmittels in engen Kontakt bzw. Berührung gebracht vorliegen, so dass sich mindestens ein Teil der elektrisch leitfähigen Flächen des Identifikationsmittels, insbesondere die Einkoppelelektrode, größtmöglich mit der Koppelelektrode überlappt. Vorteilhafterweise wird das Identifikationsmittel derart an der Kontaktfläche des Basisobjektes befestigt, dass der Abstand zwischen der elektrisch leitfähigen Koppelelektrode und der Einkoppelelektrode des Identifikationsmittels so gering wie möglich ist. Das elektrische Potential der Oberfläche des Basisobjektes wird vorzugsweise über die Koppelelektrode insbesondere kapazitiv in die elektrisch leitfähige Flächen des Identifikationsmittels, insbesondere die hierdurch gebildete Datenstruktur eingekoppelt. Wird das modulare Objekt durch einen Benutzer berührt und über das Identifikationsmittel mit einem Touchscreen in Kontakt gebracht, so kann das den Touchscreen aufweisende elektrische Gerät das modulare Objekt, insbesondere die durch die elektrisch leitfähigen Flächen und die Leiterbahnstrukturen gebildete Datenstruktur oder Datencode detektieren und identifizieren.

Es war völlig überraschend, dass neben der Datenstruktur auch die Orientierung und Position des modularen Objektes auf dem Touchscreen ermittelbar ist. Durch ein permanentes Tracking des Objektes auf dem Touchscreen kann auch eine Drehung des Objektes ermittelt werden. Dies lässt sich mitunter dadurch erreichen, indem einmal erkannte Objekte mit deren zugehöriger Datenstruktur mittels des Touchscreen beinhaltenden Geräts und Historie verfolgt werden, was auch unter bestimmten Voraussetzungen nach teilweisem Verlust von Berührungen durch den Nutzer möglich ist. Damit wird eine zuvor nicht beschriebene Individualisierung des jeweiligen Objektes auf einfache und kostengünstige Weise erreicht.

In einer weiteren bevorzugten Ausführungsform weist das erste und/oder zweite Modul mindestens eine weitere Beschichtung auf. Die Beschichtung kann zum Schutz oder aus ästhetischen Gründen auf das Objekt aufgebracht werden. Selbstverständlich sind dem Fachmann auch Farbschichten bekannt, die eine Schutzwirkung ausüben, so dass das Objekt zum einen ästhetisch gestaltet ist und zum anderen vor einwirkenden Kräften geschützt wird.

In einem weiteren Aspekt betrifft die Erfindung auch ein System, umfassend ein zuvor beschriebenes modulares Objekt und einen Berührungsbildschirm oder ein einen Berührungsbildschirm beinhaltendes Gerät, wobei mindestens ein Teil des Objektes mit dem Berührungsbildschirm in Kontakt gebracht vorliegt. Es sei bemerkt, dass die zuvor beschriebenen Ausführungsformen des modularen Objektes analog für das beanspruchte System anzuwenden sind. Das Objekt umfasst bevorzugt mindestens zwei Module, wobei das erste Modul ein Basisobjekt und das zweite Modul ein Identifikationsmittel ist. Die Module sind mittels stoffschlüssigen, formschlüssigen und/oder kraftschlüssigen Verbindungsmittel miteinander verbunden. Die Verbindung kann vorteilhafterweise reversibel oder irreversibel ausgestaltet sein, wobei eine reversible Verbindung bevorzugt ist. Durch die bevorzugte Verbindung beider Module wird eine kapazitive Kopplung beider erreicht, da das Basisobjekt mindestens eine elektrisch leitfähige Fläche aufweist und über eine Koppelelektrode mit einer elektrisch leitfähigen Schicht oder Fläche des Identifikationsmittels kapazitiv gekoppelt ist. Durch das Berühren der elektrisch leitfähigen Schicht des Basisobjektes durch einen Benutzer kann eine Touch-Eingabe auf dem Berührungsbildschirm über das Identifikationsmittel erreicht werden, sobald beide in Kontakt gebracht werden. Praktisch gesprochen heißt das, dass eine detektierbare Eingabe auf dem Berührungsbildschirm erreicht wird, sobald ein Benutzer durch eine dauerhafte oder nicht-dauerhafte Berührung, das Objekt mit dem Berührungsbildschirm in Kontakt bringt.

Eine vorteilhafte Eigenschaft des Objektes ist dessen Leitfähigkeit. Wird anstelle eines Fingers ein bevorzugtes Objekt mit einem Berührungsbildschirm in Kontakt gebracht, so bewirken die leitfähigen Bereiche des Objektes bevorzugt dasselbe Verhalten des Touchscreen wie bei Berührung durch einen Finger. Allerdings ist die leitfähige Struktur bereichsweise strukturiert. Strukturiert im Sinne der Erfindung bedeutet, dass die elektrisch leitfähige Schicht oder Fläche unterschiedlich ausgestaltet sein kann; sie kann aus vollflächigen Kreisen (Datenpunkten) und Leiterbahnstrukturen bestehen, wobei an bestimmten Stellen, insbesondere den Datenpunkten der Effekt, welcher mit dem Einbringen eines Fingers vergleichbar ist, maximiert werden soll, um für den Touch-Controller des Touchscreen bestmöglich erkennbar zu sein. Damit wird das Objekt bzw. die durch die elektrisch leitfähigen Flächen erzeugte Datenstruktur für ein mit dem Berührungsbildschirm verbundenes Datenverarbeitungssystem auswertbar.

Einem Fachmann ist bekannt, dass auf einem Touchscreen oder einem Flächensensor eine Eingabe mittels einem oder mehrerer Finger vorgenommen werden kann (Single- oder Multi-Touch). Die Technologie der Flächensensoren und die Prinzipien der Eingabe, bspw. durch welche Eigenschaften eines Fingers eine Eingabe erfolgt, sind dem Fachmann ebenfalls bekannt. Beispielsweise können neben den elektrischen Eigenschaften des Fingers (z. B. Leitfähigkeit) auch der Druck der Eingabe bzw. der daraus resultierenden Auflagefläche des Fingers, die Entfernung zum Flächensensor oder unabsichtlich eingebrachtes Material (wie z. B. Verschmutzungen) die Eingabe beeinflussen. Das bevorzugte Objekt erreicht durch die Strukturierung des leitfähigen Bereichs des Identifikationsmittels die gleiche Wirkung auf einem Berührungsbildschirm wie ein Finger, nämlich eine Eingabe an einer durch die leitfähigen Bereiche des Identifikationsmittels definierten Position auf dem Berührungsbildschirm. Der Fachmann könnte somit ohne großen experimentellen Aufwand die elektrisch leitfähigen Flächen des Identifikationsmittels derart ausführen, dass die Eigenschaften einer Eingabe mit einem Finger nachgebildet werden und mit den elektrisch leitfähigen Flächen eine Eingabe auf einem Berührungsbildschirm erzielt werden kann.

In einem Beispiel, ohne darauf beschränkt zu sein, von einem bevorzugten Identifikationsmittel in Wechselwirkung mit einem Touchscreen mit einer Elektrodenanordnung in Form eines Gitters, ist beispielweise eine geeignete Strukturierung des Datenpunktes ein ausgefüllter Kreis mit einem Durchmesser von 1 bis 20 mm, bevorzugt 4 bis 15 mm und besonders bevorzugt 6 bis 10 mm. Da ein Touchscreen geeignet ist, um die Position von Fingern zu bestimmen, ist eine gefüllte Kreisfläche eines Identifikationsmittels ebenfalls in gleicher Weise vom Touchscreen bestimmbar. Der Touchscreen oder das den Touchscreen beinhaltende Gerät kann vorteilhafterweise nicht unterscheiden, ob die Eingabe durch das Identifikationsmittel oder durch einen Finger erfolgte.

Diesbezüglich kann es vorteilhaft sein, wenn ein Benutzer das Objekt dauerhaft oder nicht dauerhaft berührt. Ein Touchscreen detektiert unter Umständen nicht alle Teile der Datenstruktur, das heißt der elektrisch leitfähigen Flächen des Identifikationsmittels (Datenpunkte werden nicht detektiert wegen ungünstiger Winkel zwischen Leiterbahnstrukturen innerhalb der Datenstruktur oder bedingt durch das Material, z.B. wegen schlechter Leitfähigkeit). Die Software, die die Touch-Ereignisse bzw. die ermittelten Touch-Punkte auswertet und interpretiert muss dann so tolerant sein, dass sie das Verschwinden einzelner Touch-Punkte toleriert und über die Historie nachvollziehen kann, ob sich das Objekt noch auf dem Touchscreen befindet. Bei einer nicht dauerhaften Berührung können Teile der elektrisch leitfähigen Flächen unter Umständen wegen fehlender Kopplung zum Benutzer nicht mehr detektiert werden.

Das modulare Objekt kann vorteilhafterweise als Spielfigur zur Interaktion mit einem Berührungsbildschirm verwendet werden, wobei mindestens ein Teil des Objektes mit dem Berührungsbildschirm in Kontakt gebracht vorliegt. Es wird eine Spielfigur bereitgestellt, die universell einsetzbar ist und mit der eine Eingabe auf einem Touchscreen vorgenommen werden kann. Bei der Spielfigur handelt es sich um ein modulares Objekt, das insbesondere beliebig dreidimensional ausgestaltet sein. Die Spielfigur wird mit einem Berührungsbildschirm in Kontakt gebracht und von dem den Berührungsbildschirm aufweisenden Gerät detektiert und identifiziert. Dabei können verschiedene Spielfiguren durch das Gerät unterschieden werden. Wie bereits dargestellt, ist die Oberfläche der Spielfigur vorteilhafterweise mit einer elektrisch leitfähigen Schicht versehen oder zumindest teilweise elektrisch leitfähig. Dabei ist die Kontaktfläche am ersten Modul hinsichtlich ihrer elektrischen Leitfähigkeit strukturiert, so dass nur bestimmte, definierte Teilflächen, nämlich mindestens die Koppelelektrode, elektrisch leitfähig sind. Die elektrisch leitfähigen Flächen des Identifikationsmittels ergeben als Gesamtheit interpretiert einen Datencode oder eine Datenstruktur. Beim Anfassen oder Berühren der Spielfigur durch einen Benutzer können diese strukturierten Teilflächen, wenn sie mit dem Berührungsbildschirm in Kontakt gebracht vorliegen, durch ein einen Berührungsbildschirm aufweisendes Gerät detektiert und identifiziert werden. Vorteilhafterweise kann eine Anwesenheit, dauerhafte oder nicht-dauerhafte Berührung, Identität, Orientierung, Rotation und/oder Bewegung mindestens einer Figur durch den Berührungsbildschirm oder ein einen Berührungsbildschirm aufweisendes Gerät detektiert werden. Hierzu werden die Anzahl der elektrisch leitfähigen Flächen des Identifikationsmittels und deren Anordnung zueinander durch das den Touchscreen aufweisende Gerät detektiert und entsprechend interpretiert.

Die Spielfigur kann dazu verwendet werden, spezielle Anwendungen für Berührungsbildschirme beinhaltende Geräte nutzen zu können. So können beispielsweise Spielfiguren als unterschiedliche Charaktere mit unterschiedlichen Eigenschaften und Fähigkeiten in Spielapplikationen zum Einsatz kommen. Es kann diesbezüglich vorteilhaft sein, wenn eine Interaktion zwischen mindestens einer Figur, einem Benutzer und/oder Berührungsbildschirm oder einem einen Berührungsbildschirm beinhaltenden Gerät stattfindet. Beispielsweise können durch den Benutzer Eingaben auf dem Berührungsbildschirm vorgenommen werden oder nur die Spielfigur mit dem Berührungsbildschirm in Kontakt gebracht vorliegen. Es können unterschiedliche Interaktionen von Figuren und Nutzerberührungen stattfinden, z. B. Spielfigur halten und mit der anderen Hand scrollen, um eine bestimmte Waffe auszuwählen, oder mit dem Finger tippen, um eine Waffe zu betätigen. Das heißt, die mit dem Touchscreen in Kontakt gebrachte Spielfigur und die Berührungen des Touchscreens durch den Benutzer können auf vielfältige Weise kombiniert werden und ergänzen sich funktionell.

Ebenso ist es bevorzugt, jede andere Art von dreidimensionalem Objekt, welches mit dem Identifikationsmittel verbindbar ist, hiermit zu individualisieren und mit einem Berührungsbildschirm nutzbar zu machen. Hierbei kann es sich beispielsweise um Dosen, Schachteln oder Verpackungen handeln. Dadurch können, z. B. auf Verpackungen, unsichtbare Informationen untergebracht werden, die den Zugriff auf weitere Informationen ermöglichen (z. B. Rezepte, Glückwünsche, Fotos, Videos, usw.). Selbstverständlich kann das modulare Objekt auch dazu verwendet werden, Produkte mit einem Echtheits- oder Prüfzertifikat zu versehen, das nicht sichtbar ist und somit nur schwer zu fälschen ist.

Es kann bevorzugt sein, dass Messwerte durch Rotation und/oder Translation einer Spielfigur auf dem Berührungsbildschirm gesammelt und als Referenzwerte gespeichert werden und diese Referenzwerte zu einem späteren Zeitpunkt mit anderen Messwerten abgeglichen werden, um die Figur zu identifizieren. Hierbei sind Drehungen von 360° oder auch weniger bevorzugt. Die Werte können vorteilhafterweise dauerhaft oder in einem Zwischenspeicher gespeichert werden.

Dies ist dem Fachmann u. a. als Teachen oder Einlernen bekannt. Einlernen bezeichnet im Sinne der Erfindung das Sammeln und Speichern von optional weiterverarbeiteten Messwerten einer Figur mit z. B. unterschiedlicher Orientierung der Figur auf dem Touchscreen, die dann später mit anderen Messwerten abgeglichen werden, um eine Figur zu identifizieren. Je nach Anwendung kann es bevorzugt sein, nicht die komplette Rotation einzulernen, sondern nur einen Ausschnitt einer 360° Drehung, beispielsweise wenn in einem Shooting Spiel nur bestimmte Abschusswinkel zugelassen werden.

Um das modulare Objekt insbesondere die Spielfigur an einem Berührungsbildschirm zu befestigen bzw. einen optimalen Kontakt mit diesem herzustellen, kann es vorteilhaft sein, die Figur zusätzlich mit einem Saugnapf und optional einer Vermittlungsmasse zwischen Identifikationsmittel und Basisobjekt auszustatten. Die Vermittlungsmasse besteht aus einem elastischen und/oder flexiblen Material und gibt dem Saugnapf Bewegungsspielraum, um dessen Funktion zu gewährleisten. Hierbei ist der Saugnapf am oberen Ende mit dem Basisobjekt verbunden und liegt am unteren kreisförmigen Ende auf dem Identifikationsmittel auf oder ist mit diesem (z. B. durch Verkleben) verbunden. Der Saugnapf ist ein napfförmiges Gebilde aus elastischem Material, das durch einen Unterdruck an eine glatte Fläche gepresst wird. Bei Anbringen wird die Luft aus dem Saugnapf gedrückt und der durch den Zug entstehende Unterschied im Luftvolumen bestimmt die Kraft, mit der die Figur am Touchscreen gehalten wird. Die dabei erreichbare Saugkraft ist proportional zur Druckdifferenz und zur wirksamen Fläche. Beim Zug durch den Benutzer wird zwischen Saugnapf und Identifikationsmittel ein primärer Unterdruck erzeugt und dieser biegt die unterliegende Fläche des Identifikationsmittels konkav zu sich und erzeugt einen sekundären Unterdruck zwischen Identifikationsmittel und Touchscreen. Dadurch wird der Bereich unter dem Rand des Saugnapfes fest an den Touchscreen gezogen und der Bereich zwischen dem Rand zwar leicht nach oben, aber in der Regel weniger stark als es durch Fehlhandlungen der Fall wäre, und flach genug, um ein sicheres Auslesen durch den kapazitiven Touchscreen zu gewährleisten. Falls das Identifikationsmittel mit dem Basisobjekt durch eine Vermittlungsmasse verbunden ist, dann ist dieses bevorzugt nachgiebiger auf Zug als der Gegenzug der Saugkraft mit der die Figur am Touchscreen gehalten wird. Durch spezielle Mechaniken im oder am Basisobjekt kann natürlich auch ein variable Saugkraft realisiert werden, dass durch den Nutzer mittels Interaktion (z. B. Betätigen eines Tasters oder Umlegen eines Hebels an der Figur) beeinflusst werden kann. Die Interaktion kann auch von selbst elektronisch mittels Stellmotoren ausgelöst werden. Die damit erreichten Eigenschaften können genutzt werden, um beispielsweise eine feste Positionierung der Spielfigur zu erleichtern, eine spielkonzeptbedingte Handlung auszuführen zu können (z. B. Gleiten einer Spielfigur ohne Abheben) oder um das versehentliche Ablösen der Figuren zu verhindern. Außerdem lassen sich damit auch Eigenschaften erzielen, welche denen von magnetischen Befestigungsmethoden ähneln und bieten damit eine sehr wirtschaftliche Alternative, da u. a. keine Magnete im Touchscreen eingebracht werden müssen.

Die Erfindung soll durch folgendes Beispiel erläutert werden, ohne jedoch hierauf beschränkt zu sein. Es sei angemerkt, dass der Begriff "Etikett" synonym zu "Identifikationsmittel" verwendet wird.

Beispiel mit den Parametern
- Etikettdurchmesser: 38.1 mm
- Anzahl der Datenpunkte: 4
- Durchmesser eines Datenpunktes (gilt für alle Datenpunkte): 7 mm
- Rasterbreite: 4 mm
- Minimaler Abstand zwischen zwei Datenpunkten (lichter Abstand): 7 mm

Das Etikett ist kreisförmig, der Gesamtdurchmesser beträgt 38.1 mm (1.5"). Die Datenstruktur wird durch vier kreisförmige, elektrisch leitfähige Vollflächen (Datenpunkte) gebildet, die durch Linien miteinander verbunden sind. Einer der Datenpunkte ist fest am äußeren Rand platziert, sodass der Rand des Datenpunktes den Außenrand des Etiketts tangiert.

Innerhalb der Etikettfläche wird ein Raster definiert mit einer Rasterbreite von 4 mm (jeweils für x- und y-Richtung). Die weiteren drei Datenpunkte können nur auf dem Raster angeordnet werden. Der Bezugspunkt eines Datenpunktes ist jeweils der Mittelpunkt. Alle so entstandenen möglichen Platzierungen bilden eine Grundmenge, die Datenpunkte zu positionieren. Diese Grundmenge wird durch folgende weitere Bedingungen eingeschränkt:
- Der Abstand zwischen Etikettrand und Mittelpunkt des jeweiligen zu positionierenden Datenpunktes darf einen Minimalwert nicht unterschreiten, wobei der Minimalwert der halbe Durchmesser des Datenpunktes ist: 3.5 mm
- Der Abstand zwischen bereits platzierten Datenpunkten und dem zu platzierenden Datenpunkt muss einen Minimalwert betragen, wobei der Minimalwert die Summe aus dem Durchmesser eines Datenpunktes und dem lichten Abstand zwischen den jeweiligen zwei Datenpunkten ist: 14 mm

Aus Gründen der Handhabbarkeit (Etikett hat keine bevorzugte Ober- bzw. Unterseite) entfällt eine weitere Menge an möglichen Positionierungen (Symmetrie).

Damit ergibt sich für die oben gewählten Parameter eine Anzahl möglicher Positionierungen für die Gesamtheit an vier Datenpunkten von 32 verschiedenen Datenstrukturen.

Tabelle 1 zeigt die Abhängigkeit der Anzahl der verschiedenen Datenstrukturen von der Wahl der Parameter.

**Tabelle 1: Anzahl verschiedener Datencodes/-strukturen in Abhängigkeit der gewählten Parameter**

| **Nr.** | **Etikettdurchmesser / [mm]** | **Anzahl der Datenpunkte** | **Durchmesser eines Datenpunktes/ [mm]** | **Rasterbreite/ [mm]** | **Lichter Abstand zw. zwei Datenpunkten / [mm]** | **Anzahl an verschiedenen Datencodes** |
|---|---|---|---|---|---|---|
| 1 | 38,1 | 3 | 8 | 4 | 8 | 9 |
| 2 | 38,1 | 3 | 6 | 4 | 8 | 21 |
| 3 | 38,1 | 4 | 8 | 4 | 8 | 4 |
| 4 | 38,1 | 4 | 7 | 4 | 8 | 10 |
| 5 | 38,1 | 4 | 7 | 4 | 7 | 32 |
| 6 | 38,1 | 4 | 6 | 4 | 6 | 61 |
| 7 | 38,1 | 4 | 6 | 3,5 | 6 | 145 |
| 8 | 20 | 4 | 4 | 3 | 4 | 8 |

Die Erfindung soll im Folgenden anhand von Figuren beispielhaft erläutert werden, ohne jedoch auf diese beschränkt zu sein. Die Figuren zeigen die Erfindung lediglich in wenigen Ausgestaltungen, wobei dem Fachmann anhand der Figuren deutlich wird, wie die Erfindung zusätzlich zu gestalten oder auszugestalten wäre. Es zeigen:
- Fig. 1, 2, 3: Ansichten eines beispielhaften modularen Objektes
- Fig. 4: Verbindung von Identifikationsmittel und Basisobjekt
- Fig. 5: Modulares Objekt und Touchscreen, miteinander in Kontakt gebracht
- Fig. 6A-D: Beispielhafte Strukturen des Identifikationsmittels
- Fig. 7A-C: Ansichten eines beispielhaften Chips
- Fig. 8A-C: Ansichten einer beispielhaften Dose
- Fig. 9A-D: Ansichten eines beispielhaften Würfels
- Fig. 10A, B: Nutzung eines Befestigungsmittels
- Fig. 11: Darstellung einer weiteren bevorzugten Ausführungsform

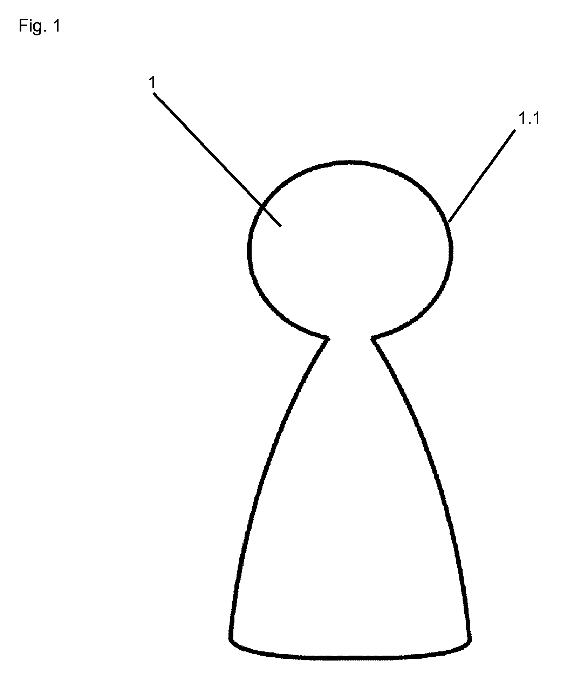

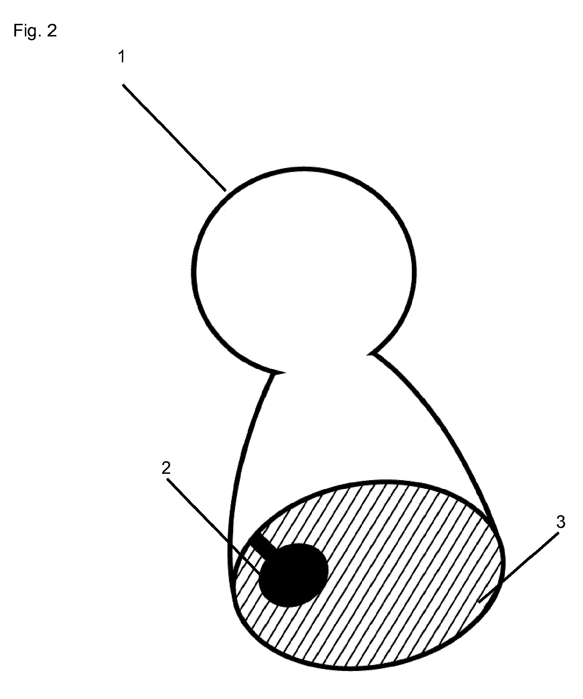

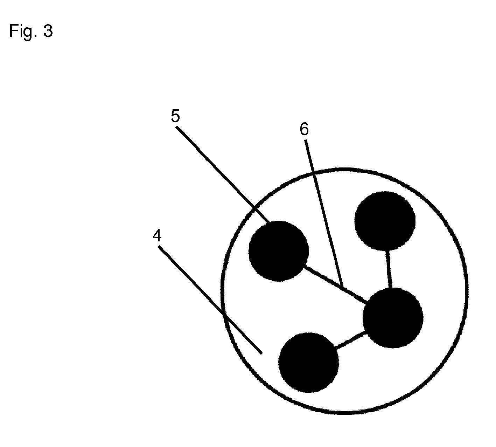

Fig. 1, 2 und 3 zeigen Ansichten eines beispielhaften modularen Objektes. Es werden Ansichten des modularen Objektes von vorne (Fig. 1) und von unten (Fig. 2) gezeigt. In Fig. 1 ist das erste Modul 1 und die Koppelfläche 1.1 dargestellt. Die Koppelfläche 1.1 kann zum Beispiel von einem Benutzer berührt werden. Die Unterseite des modularen Objektes (Fig. 2) weist eine Kontaktfläche 3 und eine Koppelelektrode 2 auf, welche über eine Leiterbahn elektrisch mit der Koppelfläche 1.1 verbunden ist. Das Identifikationsmittel 4 (gezeigt in Fig. 3) kann an der Kontaktfläche 3 angebracht werden, wobei ausgehend von der Koppelfläche 1.1 eine kapazitive Kopplung von der Koppelelektrode 2 zur Einkoppelelektrode 9 erfolgt, wobei diese über Leiterbahnstrukturen 6 mit den Datenpunkten 5 des Identifikationsmittels verbunden sind. Die Koppelfläche 1.1 wird vorzugsweise von einem Benutzer berührt.

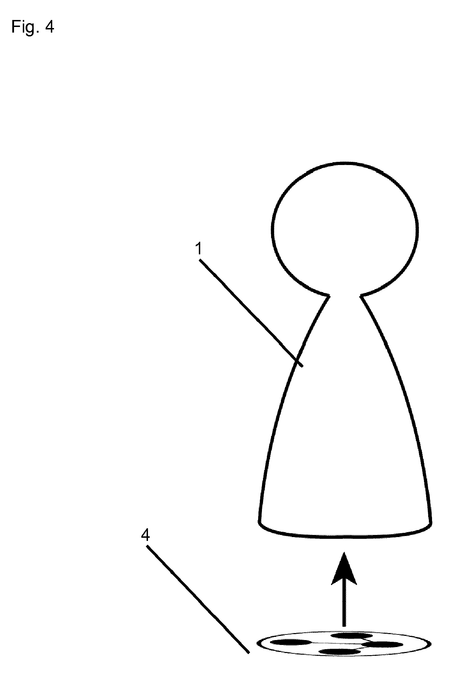

Figur 4 zeigt eine Verbindung von Identifikationsmittel und Basisobjekt. Das Identifikationsmittel 4 kann beispielsweise an der Unterseite des ersten Moduls (Basisobjekt) 1 angebracht werden. Es kann aber auch vorteilhaft sein, mehrere Identifikationsmittel 4 an verschiedenen Kontaktflächen des ersten Moduls 1 zu befestigen (nicht dargestellt).

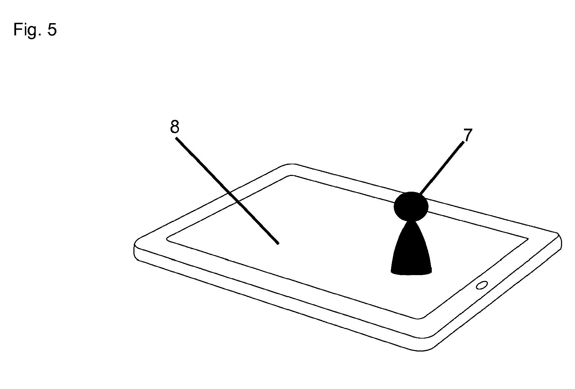

In der Fig. 5 ist ein modulares Objekt und ein Touchscreen, die miteinander in Kontakt gebracht sind, dargestellt. Das modulare Objekt 7 kann eine Eingabe auf einem Touchscreen 8 bewirken, wobei das Objekt 7 durch das den Touchscreen aufweisende Gerät detektiert und identifiziert wird.

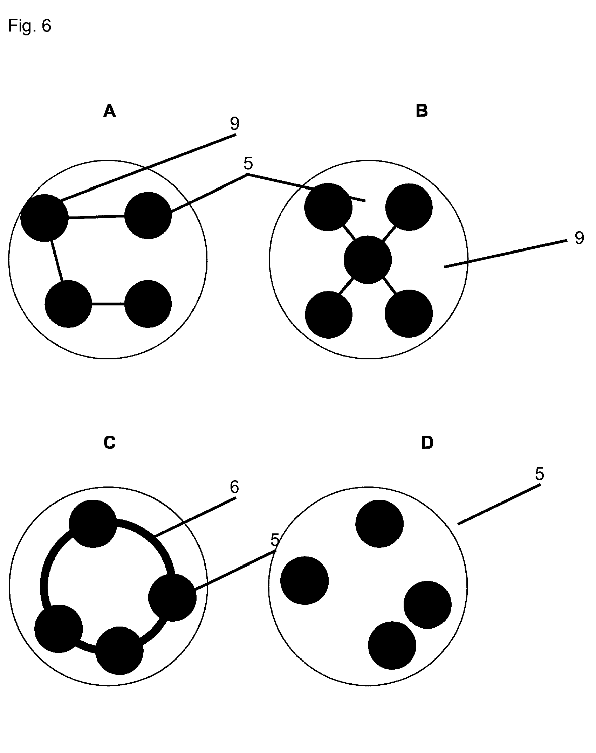

Fig. 6A-D zeigen beispielhafte Strukturen des Identifikationsmittels. In der Fig. 6A ist eine Einkoppelelektrode 9 des Identifikationsmittels dargestellt, über das eine kapazitive Verbindung zur Koppelelektrode des ersten Moduls hergestellt wird. Die Einkoppelelektrode 9 kann an verschiedenen Positionen des Identifikationsmittels angeordnet sein und dient insbesondere der kapazitiven Kopplung mit der Koppelelektrode des ersten Moduls. In der Fig. 6A liegt die Einkoppelelektrode 9 am Rand, sodass die elektrische Verbindung der Koppelelektrode mit der Koppelfläche am Basisobjekt fertigungstechnisch einfacher realisiert werden kann. Im Falle der Fig. 6B ist die Einkoppelelektrode 9 in der Mitte. Die Koppelelektrode an dem ersten Modul (Basisobjekt) liegt dann vorzugsweise ebenfalls in der Mitte. Die Identifikationsmittel sind in diesem Fall rotationsunabhängig für das Anbringen an dem ersten Modul, d.h. bei einer Drehung des Identifikationsmittels um den Mittelpunkt liegen Koppel- und Einkoppelelektrode trotzdem immer genau aufeinander. Bei der Fig. 6C liegt die Einkoppelelektrode in Form einer Leiterbahnstruktur 6 vor, die eine Ringform aufweist. Die Datenpunkte 5 liegen auf der Ringstruktur 6. Die Einkopplung mit der Koppelelektrode des ersten Moduls kann über den Ring 6 oder einen der Datenpunkte 5 erfolgen. Bei Einkopplung über den Ring 6 ist vorteilhaft, dass diese wieder rotationsunabhängig ist. Bei der Fig. 6D sind die Datenpunkte 5 nicht verbunden, sie werden direkt über das Basisobjekt miteinander verbunden, z.B. bei einer Dose als Basisobjekt müssen alle Datenpunkte auf einem Kreisring liegen, damit eingekoppelt werden kann. Jeder Punkt dient als Einkoppelelektrode und Datenpunkt in einem (in den Beispielen A-C dient nur jeweils ein Datenpunkt als Einkoppelelektrode).

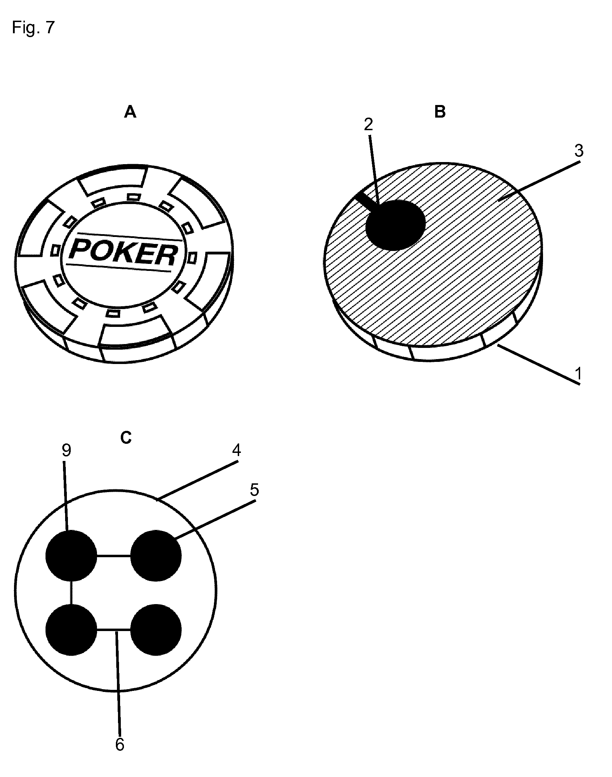

Fig. 7A-C zeigen Ansichten eines beispielhaften Chips (z. B. Pokerchip). Das modulare Objekt kann in unterschiedlichen Formen ausgestaltet werden. Zum Beispiel kann das modulare Objekt als Chip ausgestaltet sein. Der Chip, insbesondere das erste Modul 1 des Chips besitzt an der Unterseite insbesondere eine Kontaktfläche 3 mit einer Koppelelektrode 2. An die Kontaktfläche 3 des ersten Moduls 1 wird das Identifikationsmittel 4 befestigt. Das Identifikationsmittel 4 weist elektrisch leitfähige Schichten insbesondere Teilflächen auf, die als Datenpunkte 5 ausgestaltet sind. Einer der Datenpunkte ist gleichzeitig die Einkoppelelektrode 9. Die Datenpunkte 5 sind über Leiterbahnstrukturen 6 miteinander verbunden. Die Chipoberseite besteht vorzugsweise aus elektrisch leitfähigem Material. Die Leiterbahn bei Fig. 7B stellt die Verbindung zwischen elektrisch leitfähiger Oberfläche (Koppelfläche) und Koppelelektrode 2 her.

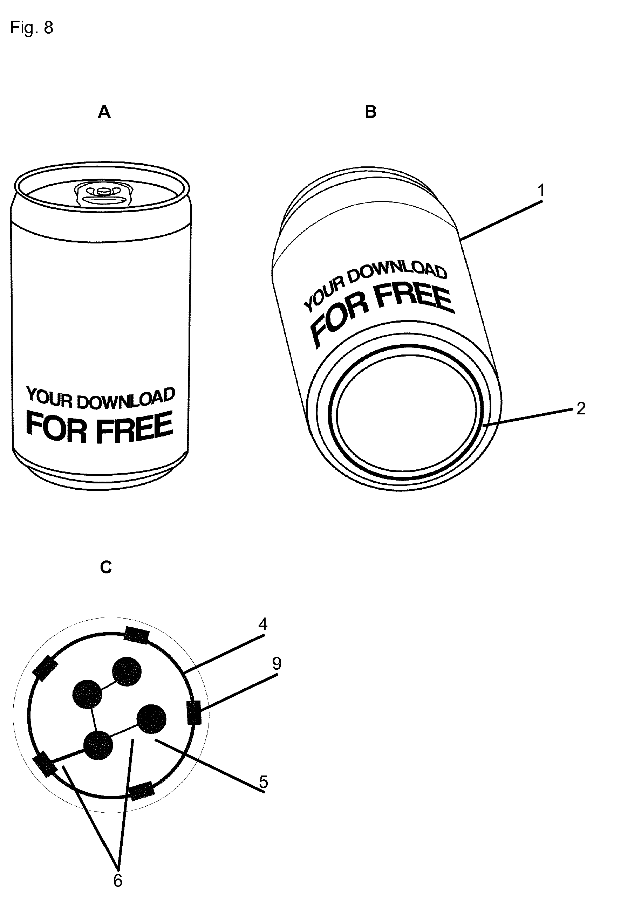

In der Fig. 8A-C sind Ansichten einer beispielhaften Dose dargestellt. Dosen bestehen typischerweise aus Metall und sind elektrisch leitfähig. Der Ring, auf dem die Dose steht (etwas breiter in Fig. 8B dargestellt) wird als Koppelelektrode 2 benutzt. Die Einkoppelelektroden 9 liegen in Fig. 8C direkt auf der Koppelelektrode 2 der Dose, welche in diesem Fall dem Dosenring entspricht. Der Ring auf dem Identifikationsmittel 4 verbindet die Einkoppelelektroden 9. Die Einkoppelelektroden 9 allein sind bevorzugt so klein, dass sie keine Touchereignisse auf dem Touchscreen auslösen und gleichzeitig in Summe so groß, dass genügend Einkoppelfläche zur Verfügung steht. Der Ring verbindet die Einkoppelflächen, die mit der Punktstrukur (Datenpunkte 5) über Leiterbahnstrukturen 6 verbunden sind.

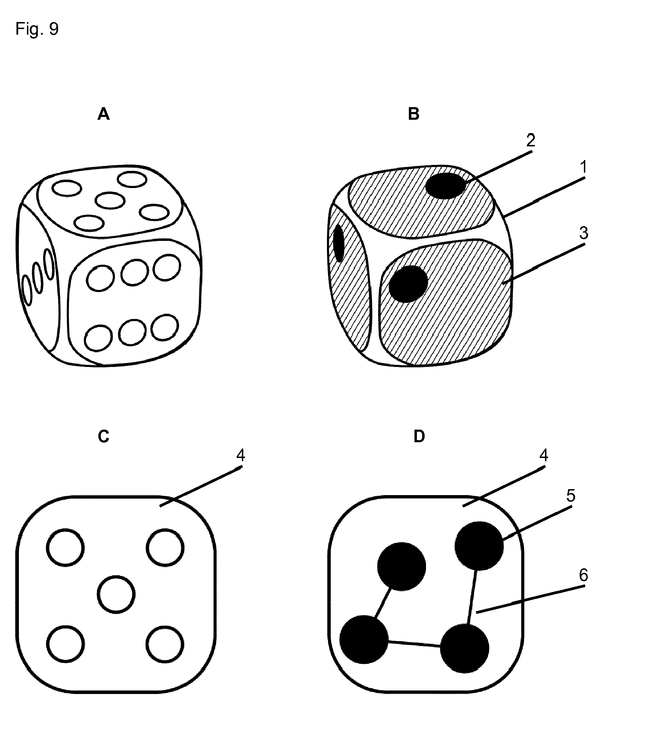

Fig. 9A-D zeigen Ansichten eines beispielhaften Würfels. In der Fig. 9A ist ein normal aussehender Würfel dargestellt, an dem Identifikationsmittel angebracht sind. Die Fig. 9B zeigt einen Würfel als erstes Modul 1 (Basisobjekt) ohne Identifikationsmittel, aber mit Koppelelektroden 2 und Kontaktflächen 3. Die Fig. 9C, D zeigen die Vorderseite (Fig. 9C) und Rückseite (Fig. 9D) des Identifikationsmittels 4. Auf der Rückseite des Identifikationsmittels 4 sind Datenpunkte 5 und Leiterbahnstrukturen 6 aufgetragen, so dass eine kapazitive Einkopplung mit dem ersten Modul erfolgen und eine Eingabe auf einem Touchscreen erreicht werden kann.

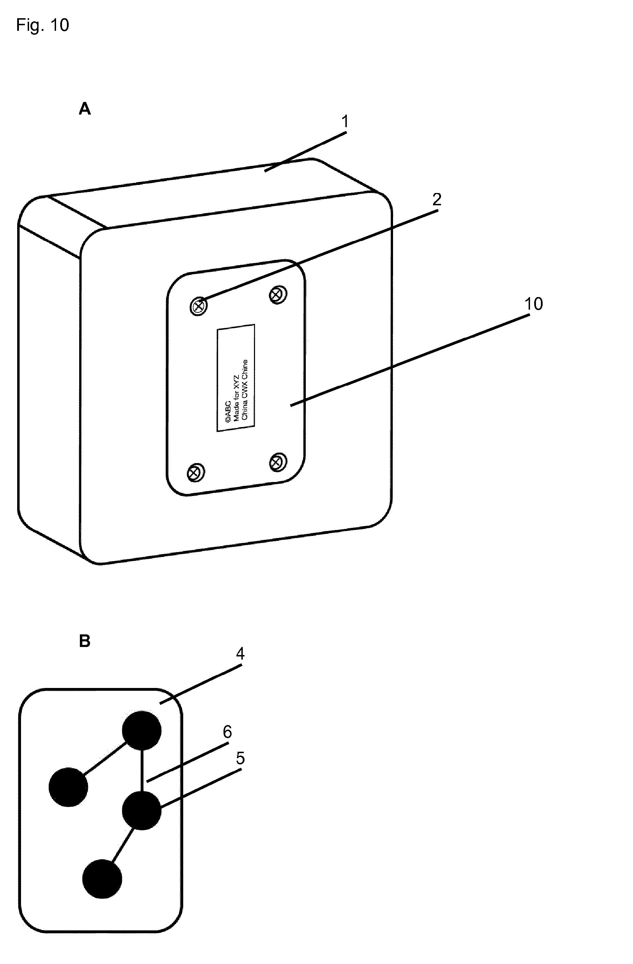

In Fig. 10A, B ist eine Nutzung eines Befestigungsmittels in einem modularen Objekt dargestellt. Es ist ein Objekt von unten mit einem Batteriefach 10 skizziert. Hierbei liegt eine Schraube (es wären aber auch mehrere möglich) in einer Ebene mit dem Deckel. Diese Schraube liegt später auf dem Touchscreen auf und dient insbesondere als Koppelelektrode 2 für das Identifikationsmittel 4 und stellt im Inneren des Batteriefachs 10 eine Verbindung zur Koppelfläche (nicht dargestellt) her. Die drei anderen dargestellten Schrauben dienen bevorzugt nur zur Befestigung. Sie sind tiefer eingelassen, haben keinen Kontakt zum Identifikationsmittel 4 und lösen keine Eingabe auf dem Touchscreen aus. Das Identifikationsmittel 4 ist passend zum Deckel des Batteriefaches 10 ausgestaltet. Im Beispiel ist die Rückseite des Identifikationsmittels 4 mit einer Struktur aus Datenpunkten 5 und Leiterbahnstrukturen 6 dargestellt. Diese Struktur ist von außen nicht sichtbar.

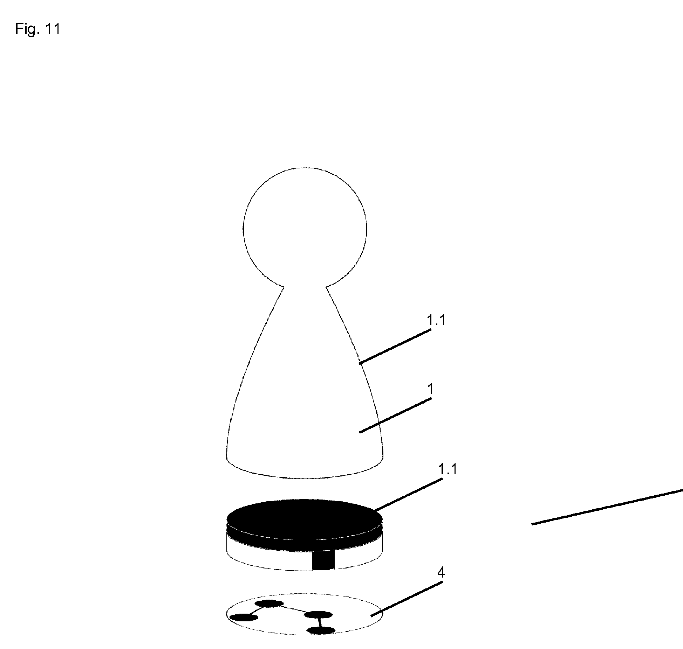

Fig. 11 zeigt eine weitere bevorzugte Ausführungsform des modularen Objektes. Die Figur besteht aus zwei ersten Modulen (Basisobjekte) und einem zweiten Modul. Das obere erste Modul 1 ist ein leitfähiges oder leitfähig beschichtetes Basisobjekt mit Koppelfläche 1.1 und Koppelelektrode (nicht sichtbar, am Boden des Moduls). Das mittlere Modul (das zweite Basisobjekt) besteht aus einem leitfähigen Teil (schwarz) und einem elektrisch nicht leitfähigen Teil (weiß). Die Fläche, auf dem das obere erste Modul 1 angebracht ist, ist die Koppelfläche 1.1. Die Koppelelektrode (nicht sichtbar) koppelt dann zum Identifikationsmittel 4 über.

Anhand der Figuren kann festgestellt werden, dass das modulare Objekt unterschiedlich ausgestaltet sein kann und es in unterschiedlicher Weise realisiert werden kann. Es können unterschiedliche Formen unter die Erfindung subsumiert werden, wobei das Prinzip des modularen Objektes auch in bestehende Formen (wie z. B. Dosen oder Chips) durch einfache Weise integriert werden kann.

### Bezugszeichenliste

- 1: erstes Modul
- 1.1: Koppelfläche
- 2: Koppelelektrode
- 3: Kontaktfläche
- 4: Identifikationsmittel
- 5: Datenpunkte
- 6: Leiterbahnstrukturen
- 7: modulares Objekt
- 8: Touchscreen
- 9: Einkoppelelektrode
- 10: Batteriefach

## Patentansprüche

1. Modulares Objekt für Berührungsbildschirme, umfassend mindestens ein erstes und ein zweites Modul, wobei
a. das erste Modul ein Basisobjekt mit elektrisch leitfähigen Funktionselementen ist, die mindestens aus einer Koppelelektrode an einer Kontaktfläche des Basisobjekts und einer damit elektrisch verbundenen Koppelfläche bestehen, wobei das Basisobjekt mindestens eine Kontaktfläche aufweist, und
b. das zweite Modul ein, mindestens eine elektrisch leitfähige Schicht umfassendes Identifikationsmittel ist, wobei die elektrisch leitfähige Schicht mindestens eine Einkoppelelektrode umfasst,
wobei das zweite Modul stoffschlüssig, kraftschlüssig und/oder formschlüssig an der Kontaktfläche des ersten Moduls angebracht ist.

2. Modulares Objekt nach Anspruch 1, wobei das Basisobjekt elektrisch leitfähig ist und/oder eine elektrisch leitfähige Schicht zumindest teilweise in, zwischen und/oder auf einem elektrisch nicht leitfähigen Material vorliegt.

3. Modulares Objekt nach Anspruch 1 oder 2, wobei das erste und zweite Modul kapazitiv gekoppelt oder direkt elektrisch miteinander verbunden vorliegen.

4. Modulares Objekt nach einem oder mehreren der vorherigen Ansprüche, wobei ein oder mehrere Identifikationsmittel direkt oder indirekt an dem Basisobjekt angebracht sind.

5. Modulares Objekt nach einem oder mehreren der vorherigen Ansprüche, wobei die Koppelelektrode als elektrisch leitfähige Schicht auf der Kontaktfläche des Basisobjektes mindestens als Teilfläche ausgeführt ist.

6. Modulares Objekt nach einem oder mehreren der vorherigen Ansprüche, wobei ein oder mehrere elektrisch leitfähige Befestigungsmittel an der Kontaktfläche des Basisobjektes angebracht sind und mindestens als Teil eines Funktionselementes vorliegen.

7. Modulares Objekt nach einem oder mehreren der vorherigen Ansprüche, wobei das Identifikationsmittel mittels Spritzgießverfahren, besonders bevorzugt Folienhinterspritzen, In-Mold-Verfahren, Schweißverfahren, und/oder Kleben mit dem Basisobjekt verbunden ist.

8. Modulares Objekt nach einem oder mehreren der vorherigen Ansprüche,
wobei das Identifikationsmittel durch ein additives, semiadditives oder subtraktives Verfahren hergestellt und/oder auf dem Basisobjekt angebracht ist.

9. Modulares Objekt nach einem oder mehreren der vorherigen Ansprüche,
wobei das Identifikationsmittel durch ein Druckverfahren, bevorzugt ein Massendruckverfahren, hergestellt ist.

10. Modulares Objekt nach einem oder mehreren der vorherigen Ansprüche,
wobei das Identifikationsmittel durch ein Transferfolienverfahren, bevorzugt ein Metallfolientransferverfahren und besonders bevorzugt durch ein Kaltfolientransferverfahren hergestellt ist.

11. Modulares Objekt nach einem oder mehreren der vorherigen Ansprüche,
wobei die elektrisch leitfähigen Flächen des Identifikationsmittels in Form von Teilflächen, insbesondere gefüllten Kreisen oder Kreisringen vorliegen, wobei Teilflächen mittels Linienstrukturen elektrisch verbunden sind und wobei mindestens eine Teilfläche die Einkoppelelektrode ist.

12. Modulares Objekt nach einem oder mehreren der vorherigen Ansprüche,
wobei das erste und/oder zweite Modul mindestens eine weitere Beschichtung aufweist.

13. Modulares Objekt nach einem oder mehreren der vorherigen Ansprüche,
wobei die Koppelelektrode des Basisobjektes und die Einkoppelelektrode des Identifikationsmittels derart miteinander verbunden sind, dass eine größtmögliche Überlappung vorliegt.

14. System, umfassend ein modulares Objekt nach den Ansprüchen 1 bis 13 und
einen Berührungsbildschirm oder ein einen Berührungsbildschirm beinhaltendes Gerät, wobei mindestens ein Teil des Objektes mit dem Berührungsbildschirm in Kontakt gebracht vorliegt.

15. System nach Anspruch 14, wobei das Objekt dauerhaft oder nicht dauerhaft
durch einen Benutzer berührt wird.

16. Verwendung eines modularen Objektes nach den Ansprüchen 1 bis 13 als
Spielfigur zur Interaktion mit einem Berührungsbildschirm, wobei mindestens ein Teil des Objektes mit dem Berührungsbildschirm in Kontakt gebracht vorliegt.

17. Verwendung nach Anspruch 16, wobei Messwerte durch Rotation und/oder
Translation einer Spielfigur auf dem Berührungsbildschirm gesammelt und als Referenzwerte gespeichert werden und diese Referenzwerte zu einem späteren Zeitpunkt mit anderen Messwerten abgeglichen werden, um die Figur zu identifizieren.

18. Verwendung nach Anspruch 16 oder 17, wobei eine Interaktion zwischen
mindestens einer Figur, einem Benutzer und/oder Berührungsbildschirm oder einem einen Berührungsbildschirm beinhaltenden Gerät stattfindet.

19. Verwendung nach einem oder mehreren der vorherigen Ansprüche, wobei
eine Anwesenheit, dauerhafte oder nicht-dauerhafte Berührung, Identität, Orientierung, Rotation und/oder Bewegung mindestens einer Figur durch den Berührungsbildschirm oder ein einen Berührungsbildschirm aufweisendes Gerät detektiert wird.
